# DEMANDE DE BREVET EUROPEEN

(11) **EP 1 362 756 A1**
(43) Date de publication de la demande: **19.11.2003**
(21) Numéro de dépôt: 03009588.9
(22) Date de dépôt: 29.04.2003
(51) Int. Cl.: B60T 13/52, B60R 13/08, G10K 11/16

(54) **Servomoteur pneumatique d'assistance au freinage à niveau de bruit réduit**

(30) Priorité: 07.05.2002 FR 0205774
(71) Demandeur: ROBERT BOSCH GmbH, 70442 Stuttgart (DE)
(72) Inventeur: Lorkin, Timothy, 75019 Paris (FR)
(74) Mandataire: Hurwic, Aleksander Wiktor

(57) **Abrégé**

La présente invention a principalement pour objet un servomoteur pneumatique d'assistance au freinage comportant une enveloppe formée de deux coquilles (3,5) définissant un volume intérieur divisé en deux chambres par une jupe montée à coulissement étanche, ladite jupe (7) est actionnée par une différences de pressions provoquée par la commande d'une valve trois voies (17) disposée dans un piston pneumatique disposé sensiblement dans la partie centrale de la jupe, ledit servomoteur comportant également des moyens (53) pour réduire le bruit caractérisé en ce que lesdits moyens (53) sont des moyens d'appui comportant une couche d'élastomère (56) disposée entre l'une des coquilles (3,5) et un élément rigide (60).

La présente invention s'applique notamment à l'industrie automobile.

La présente invention s'applique principalement à l'industrie des systèmes de freinage pour véhicules automobiles et notamment pour voitures particulières.

## Description

La présente invention se rapporte principalement à un servomoteur pneumatique d'assistance au freinage comportant des moyens pour réduire le bruit.

Les circuits de freinage de type connu comporte un maître-cylindre assisté par un servomoteur d'assistance pneumatique au freinage, le circuit de freinage étant actionné par une tige de commande reliée à une pédale de frein. Les circuits de freinage comportent également de manière de plus en plus fréquente, des dispositifs de régulation du freinage afin d'éviter le blocage des roues lors d'un freinage d'urgence. et ainsi augmenter la maîtrise du véhicule par le conducteur, ces dispositifs sont appelés dispositifs ABS. Les dispositifs ABS comportent un calculateur électronique recueillant les informations récoltées par des capteurs disposés au niveau des roues du véhicules afin de détecter le blocage des roues, les dispositifs ABS comportent également des électrovannes, au moins un accumulateur de pression, une pompe hydraulique, par exemple une pompe électrique pour fournir du liquide de frein sous pression.

Lors de la détection d'un blocage de roues par le calculateur du dispositif ABS, celui relâche dans un premier temps, le freinage au niveau des roues proche du blocage, puis dans un deuxième temps augmente la pression de liquide de frein au niveau de ces roues pour de nouveau les freiner, pour cela la pompe hydraulique est mise en fonctionnement. Le fonctionnement du dispositif ABS est susceptible de provoquer des vibrations, ces vibrations se transmettant à l'ensemble du circuit hydraulique et faisant apparaître du bruit. Ce bruit est gênant pour le conducteur d'une part pour son confort de conduite et d'autre part parce qu'il peut craindre un mauvais fonctionnement de son circuit de freinage.

La Demanderesse a découvert que ces vibrations se transmettaient par l'intermédiaire du maître-cylindre au servomoteur, puis par l'intermédiaire du servomoteur au tablier séparant le compartiment de l'habitacle du véhicule et également au pédalier. Ces vibrations sont alors source de bruit, le servomoteur étant particulièrement sensible à ces vibrations du fait de la faible épaisseur de la tôle formant la parois extérieure du servomoteur. De plus les vibrations au niveau du pédalier provoquent une sensation désagréable chez le conducteur du véhicule.

Il est connu des dispositifs afin de réduire le bruit provoqué par les vibrations dans les cylindres de roues lors du fonctionnement du dispositif ABS comportant un capteur associé à chaque cylindre de roue transmettant au bloc de commande électronique un signal correspondant au bruit provoqué par les vibrations. Le bloc de commande envoie alors aux électrovalves un signal afin de réguler la pression du liquide de frein fourni à chaque cylindre de roue et provoquer une vibration à une fréquence prédéterminée afin d'enrayer les vibrations dues au fonctionnement du dispositif ABS. Cependant ce dispositif est très coûteux, de mise en oeuvre difficile et nécessite des réglages très minutieux.

C'est par conséquent un but de la présente invention d'offrir un servomoteur pneumatique d'assistance au freinage de faible volume sonore.

C'est également un but de la présente invention d'offrir un servomoteur pneumatique d'assistance au freinage de fabrication et de montage sur véhicule simples.

C'est également un but de la présente invention d'offrir un tel servomoteur pneumatique d'assistance au freinage d'encombrement comparable aux servomoteurs de type connu.

C'est également un but de la présente invention d'offrir un système de freinage ayant une bonne sensation pédale.

Ces but sont atteints par un servomoteur d'assistance pneumatique au freinage selon la présente invention formé par une première et une secondes coquilles métalliques et comportant des moyens appliqués contre l'une au moins des coquilles du servomoteur de manière à rigidifier ladite coquille et ainsi réduire les vibrations du servomoteur et la transmission de ceux-ci au tablier séparant le compartiment moteur de l'habitacle et au pédalier.

La présente invention permet également avantageusement d'améliorer la qualité du bruit haute fréquence auquel les conducteurs sont particulièrement sensibles.

La présente invention a principalement pour objet pneumatique d'assistance au freinage comportant une enveloppe formée de deux coquilles définissant un volume intérieur divisé en deux chambres par une jupe montée à coulissement étanche, ladite jupe est actionnée par une différences de pressions provoquée par la commande d'une valve trois voies disposée dans un piston pneumatique disposé sensiblement dans la partie centrale de la jupe, ledit servomoteur comportant également des moyens pour réduire le bruit caractérisé en ce que lesdits moyens sont des moyens d'appui comportant une couche d'élastomère disposée entre l'une des coquilles et un élément rigide .

La présente invention a également pour objet pneumatique d'assistance au freinage caractérisé en ce que les moyens ont la forme d'un couvercle comportant un orifice centrale et s'étendant radialement vers l'extérieur par une bordure de forme sensiblement tronconique, dont une des extrémités radiale est en appui sur l'une des coquilles .

La présente invention a également pour objet pneumatique d'assistance au freinage caractérisé en ce que un élément en caoutchouc est interposé entre l'extrémité radialement externe de la bordure et l'enveloppe du servomoteur.

La présente invention a également pour objet pneumatique d'assistance au freinage caractérisé en ce que l'élément en caoutchouc est un capuchon annulaire bordant l'extrémité radialement externe du couvercle.

La présente invention a également pour objet pneumatique d'assistance au freinage caractérisé en ce que les moyens sont fixés audit servomoteur par un ensemble vis-écrou.

La présente invention a également pour objet pneumatique d'assistance au freinage caractérisé en ce que les moyens ont la forme d'un disque .

La présente invention a également pour objet pneumatique d'assistance au freinage caractérisé en ce que les moyens sont fixés audit servomoteur par collage.

La présente invention a également pour objet pneumatique d'assistance au freinage caractérisé en ce que la couche d'élastomère est comprise entre le premier élément rigide et un second élément rigide .

La présente invention a également pour objet pneumatique d'assistance au freinage caractérisé en ce que les éléments rigides sont réalisés en tôle d'acier.

La présente invention a également pour objet pneumatique d'assistance au freinage caractérisé en ce que les éléments rigides sont réalisés en tôle d'aluminium.

La présente invention a également pour objet pneumatique d'assistance au freinage caractérisé en ce que les moyens sont réalisés en tôle sandwich.

La présente invention sera mieux comprise à l'aide de la description qui va suivre et des dessins annexés pour lesquelles l'avant et l'arrière correspondent respectivement à la gauche et la droite sur les dessins et sur lesquelles :
La figure 1 est un schéma d'un circuit de freinage comportant un dispositif d'antiblocage des roues ;
La figure 2 est une demi-vue en coupe longitudinale d'un premier mode de réalisation d'un servomoteur d'assistance pneumatique au freinage selon la présente invention;
La figure 3 est une demi-vue en coupe longitudinale d'un second mode de réalisation d'un servomoteur d'assistance pneumatique au freinage selon la présente invention.

Les mêmes références sont utilisées sur toutes les figures pour désigner les éléments ayant sensiblement la même fonction.

L'ensemble des éléments décrits sont de forme de révolution d'axe X, l'axe longitudinal du servomoteur.

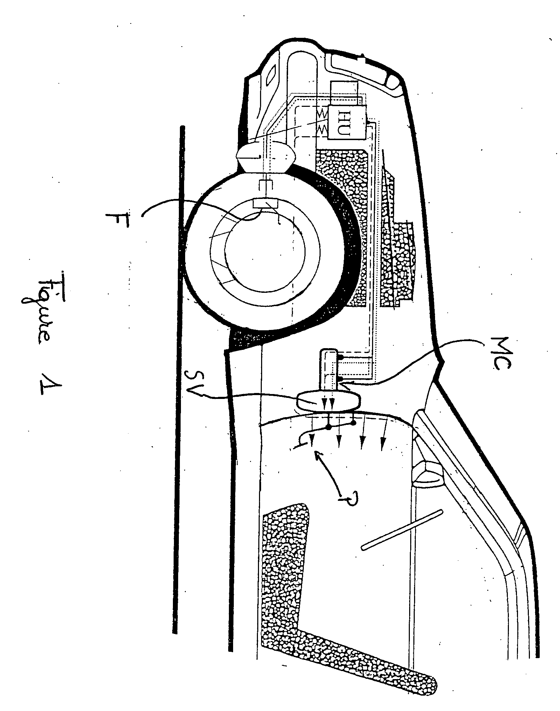

Sur la figure 1, on peut voir une vue d'ensemble schématique d'un véhicule automobile comportant un circuit de freinage muni d'un pédalier P comportant au moins une pédale de frein actionnant une tige de commande commandant un servomoteur d'assistance pneumatique au freinage de type connu SV et un maître-cylindre MC relié aux freins F disposés au niveau des roues. Le circuit de freinage comporte également un dispositif ABS HU disposé entre le maître-cylindre et les roues. Les flèches représentent le sens de transmission du bruit et des vibrations provoqués par le fonctionnement du dispositif ABS.

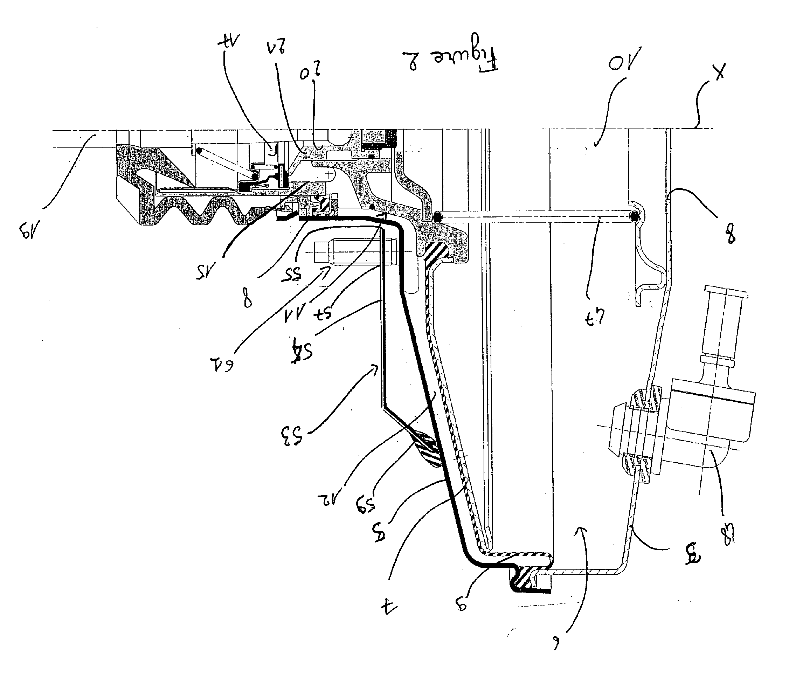

Sur la figure 2, on peut voir un servomoteur d'assistance pneumatique au freinage selon la présente invention d'axe longitudinal X comportant une enveloppe 1 formée d'une première et d'une seconde coquilles 3, 5 serties par leur contour extérieur et définissant un volume intérieur 6, la coquille arrière 5 s'étendant vers l'arrière par un manchon 8 et la coquille avant 3 comportant un orifice de réception d'un maître-cylindre (non représenté). Le servomoteur comporte également une paroi 7 annulaire mobile montée à coulissement étanche dans l'enveloppe 1 et divisant le volume 6 en une chambre à basse pression 10 située à l'avant de la paroi 7 et une chambre de à pression variable 12 située à l'arrière du servomoteur, l'étanchéité est réalisée par exemple au moyen d'une membrane déroulante 9 en caoutchouc. Le servomoteur comporte également un piston pneumatique 11 disposé dans la partie centrale de la paroi 7 et dans sa partie arrière d'un manchon 15 sensiblement cylindrique. Le piston pneumatique 11 est monté à coulissement étanche dans le manchon 8 par des moyens étanches 16.

Dans le manchon 15, est disposé une valve trois voies 17 commandée par une tige de commande 19 reliée à une première extrémité longitudinale vers l'arrière à une pédale de frein (non représentée) et reçue à une seconde extrémité opposée à la première extrémité dans une cavité sensiblement tronconique 20 pratiqué dans la partie arrière d'un plongeur 21

Nous ne décrirons pas la structure de la valve trois voies qui est connue.

Un ressort de rappel 47 est également monté entre la face avant du piston pneumatique 11 et la coquille 3 dans la chambre de vide

Une tige de poussée (non représentée) est disposée en avant du plongeur actionnant au moins un piston d'un maître-cylindre (non représenté), un disque de réaction (non représenté) en matériau sensiblement incompressible est disposé entre le plongeur 21 et la tige de poussée 47, afin de retransmettre la réaction du circuit de freinage au conducteur.

La chambre avant est reliée en permanence à une source de vide par un moyen de connexion étanche, par exemple une pipe 48 fixée dans la coquille 1 et reliée par exemple à une pompe à vide.

Au repos, la valve trois voies 17 met en communication la chambre de travail 12 et la chambre de vide 10, et lors d'une phase de freinage la valve trois interrompt la communication entre la chambre à basse pression 10 et la chambre à pression variable 12 et met en communication la chambre de travail 12 avec l'environnement à haute pression par exemple l'air à pression atmosphérique, la paroi est alors mise en mouvement dans le sens de la flèche 51 sous l'effet de la différence de pression entre les deux chambres 10,12. La tige de poussée 49 se déplace alors également dans le sens de la flèche 51 et actionne au moins un piston d'un maître-cylindre (non représentés).

Le servomoteur comporte également un moyen 53 pour amortir le bruit disposé à l'extérieur de l'enveloppe 1 et fixé sur la surface extérieure d'au moins une coquille 3, 5. Le moyen 53 a sensiblement la forme d'un couvercle 55 muni d'un orifice centrale 55 bordé de passages 57 pour la fixation du moyen 53 sur le servomoteur, ces passages 57 sont avantageusement au nombre de quatre, angulairement répartis. Le couvercle 54 est également muni d'une extrémité radialement externe formée par une bordure 59 de forme sensiblement tronconique, avantageusement orientée vers l'extérieur.

Le moyen 53 est disposé autour du manchon 8 du servomoteur, la conicité de la bordure 59 orientée vers la tige d'actionnement et l'extrémité radialement externe de la bordure 59 en appui contre la coquille 5 du servomoteur. Le couvercle 51 est fixé de manière rigide au servomoteur par des moyens de fixation 61, par exemple un ensemble vis-écrou. Les moyens de fixation 61 peuvent avantageusement être les mêmes que les moyens de fixation du servomoteur au tablier du véhicule.

Le moyen 53 est réalisé en un matériau comportant une couche d'élastomère 54, par exemple de caoutchouc collé contre au moins un élément rigide 56, par exemple de la tôle d'acier ou de la tôle d'aluminium, et avantageusement entre deux éléments rigides 56,57, du type « tôle sandwich » à fort pouvoir amortisseur.

Le moyen 53 est avantageusement muni sur toute sa circonférence extérieur d'un capuchon annulaire par exemple en caoutchouc en contact avec la coquille du servomoteur.

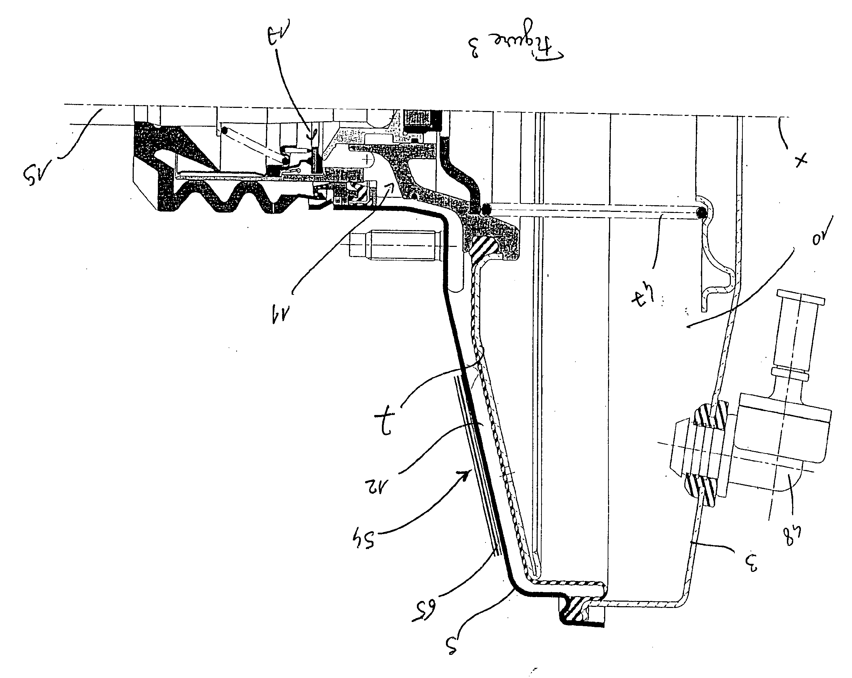

Sur la figure 3, on peut voir un second mode de réalisation d'un moyen pour amortir le bruit selon la présente invention.

Le moyen 53 est formé d'un disque 65 sur l'une des coquilles du servomoteur, avantageusement par collage. Sur la figure 3, le moyen 53 est monté sur la face arrière du servomoteur autour du manchon 8.

Le moyen 53 est réalisé en un matériau comportant une couche d'élastomère 58, par exemple de caoutchouc collé contre au moins un élément rigide 60, par exemple de la tôle d'acier ou de la tôle d'aluminium, et avantageusement entre deux éléments rigides 60,62, du type « tôle sandwich » à fort pouvoir amortisseur.

Le servomoteur selon la présente invention permet de réduire le bruit provoqué par le système de freinage lors du fonctionnement du dispositif d'antiblocage des roues de 1 à 2 décibels.

Il est bien entendu que le fait de disposer le moyen pour amortir le bruit sur la face intérieure ou extérieure des coquilles ne sort pas du cadre de la présente invention.

Il est bien entendu que le fait d'utiliser le moyen 53 sur les deux coquilles du servomoteur ne sort pas du cadre de la présente invention.

La présente invention s'applique notamment à l'industrie automobile.

La présente invention s'applique principalement à l'industrie des systèmes de freinage pour véhicules automobiles et notamment pour voitures particulières.

## Revendications

1. Servomoteur pneumatique d'assistance au freinage comportant une enveloppe formée de deux coquilles (3,5) définissant un volume intérieur divisé en deux chambres par une jupe montée à coulissement étanche, ladite jupe (7) est actionnée par une différences de pressions provoquée par la commande d'une valve trois voies (17) disposée dans un piston pneumatique disposé sensiblement dans la partie centrale de la jupe, ledit servomoteur comportant également des moyens (53) pour réduire le bruit **caractérisé en ce que** lesdits moyens (53) sont des moyens d'appui comportant une couche d'élastomère (56) disposée entre l'une des coquilles (3,5) et un élément rigide (60).

2. Servomoteur pneumatique d'assistance au freinage selon la revendication 1 **caractérisé en ce que** les moyens (53) ont la forme d'un couvercle comportant un orifice centrale (55) et s'étendant radialement vers l'extérieur par une bordure (59) de forme sensiblement tronconique, dont une des extrémités radiale est en appui sur l'une des coquilles (3,5).

3. Servomoteur pneumatique d'assistance au freinage selon la revendication 2 **caractérisé en ce que** un élément en caoutchouc est interposé entre l'extrémité radialement externe de la bordure (59) et l'enveloppe (1) du servomoteur.

4. Servomoteur pneumatique d'assistance au freinage selon la revendication 3 **caractérisé en ce que** l'élément en caoutchouc est un capuchon annulaire bordant l'extrémité radialement externe du couvercle.

5. Servomoteur pneumatique d'assistance au freinage selon l'une quelconque des revendications précédentes **caractérisé en ce que** les moyens (53) sont fixés audit servomoteur par un ensemble vis-écrou.

6. Servomoteur pneumatique d'assistance au freinage selon la revendication 1 ou 2 **caractérisé en ce que** les moyens (53) ont la forme d'un disque (63).

7. Servomoteur pneumatique d'assistance au freinage selon le revendication 6 **caractérisé en ce que** les moyens (53) sont fixés audit servomoteur par collage.

8. Servomoteur pneumatique d'assistance au freinage selon l'une quelconque des revendications précédentes **caractérisé en ce que** la couche d'élastomère (54) est comprise entre le premier élément rigide (56) et un second élément rigide (58).

9. Servomoteur pneumatique d'assistance au freinage selon la revendication 8 **caractérisé en ce que** les éléments rigides (56, 58) sont réalisés en tôle d'acier.

10. Servomoteur pneumatique d'assistance au freinage selon la revendication 8 **caractérisé en ce que** les éléments rigides (56, 58) sont réalisés en tôle d'aluminium.
